# EUROPÄISCHE PATENTSCHRIFT

(11) **EP 4 571 631 B1**
(45) Veröffentlichungstag und Bekanntmachung des Hinweises auf die Patenterteilung: **29.07.2026**
(21) Anmeldenummer: 24213668.7
(22) Anmeldetag: 18.11.2024
(51) Int. Cl.: G06T 3/4069

(54) **VERFAHREN ZUR ANWENDUNG EINER METHODE ZUR ERHÖHUNG EINER AUFLÖSUNG EINES BILDES EINER WÄRMEBILDKAMERA**
METHOD FOR APPLYING A METHOD FOR ENHANCING THE RESOLUTION OF AN IMAGE OF A THERMAL CAMERA
PROCÉDÉ D'UTILISATION D'UNE MÉTHODE POUR AUGMENTER LA RÉSOLUTION D'UNE IMAGE D'UNE CAMÉRA THERMIQUE

(30) Priorität: 14.12.2023 DE 102023212660
(43) Veröffentlichungstag der Anmeldung: 18.06.2025
(73) Patentinhaber: Robert Bosch GmbH, 70442 Stuttgart (DE)
(72) Erfinder: Meyer, Patrick, 70771 Leinfelden-Echterdingen (DE); Frank, Michael, 75015 Bretten (DE); Frischen, Andreas, 71229 Leonberg (DE); Boettcher, Ina Sophie, 72226 Simmersfeld (DE); Ventsch, Nicole, 70437 Stuttgart (DE); Rumberg, Axel, 76199 Karlsruhe (DE)

(56) Entgegenhaltungen:
- WO-A1-2013/144298
- JP-A- 2005 173 879
- JP-A- 2012 209 656

## Beschreibung

Die Erfindung betrifft ein Verfahren zur Anwendung einer Methode zur Erhöhung einer Auflösung eines Bildes einer Wärmebildkamera. Ferner betrifft die Erfindung ein Computerprogramm, eine Vorrichtung sowie ein Speichermedium zu diesem Zweck.

### Stand der Technik

Ein Hauptargument bei der Kaufentscheidung einer Wärmebildkamera ist die Auflösung des Wärmebildes. Je höher die Auflösung ist, desto mehr Details sind erkennbar und desto mehr Anwendungsfälle können mit ihr bedient werden. Die Auflösung ist somit ein wichtiges Merkmal von hochwertigen Wärmebildkameras. Da sie jedoch direkt von der Qualität und somit vom Preis der verwendeten Infrarotsensoren abhängt, bedeutet eine bessere Auflösung durch die Sensoren automatisch auch einen höheren Preis der Komponenten. Um die Auflösung ohne teurere Komponenten dennoch zu verbessern, können alternativ Algorithmen verwendet werden, die die Bildqualität verbessern. Für die Verbesserung der Auflösung, d.h. insbesondere ein Erhöhen einer Anzahl an Pixeln, werden beispielsweise Super-Resolution-Algorithmen verwendet. Hierbei können sowohl klassische, d.h. auf klassischer Bildverarbeitung basierende, als auch maschinenlernbasierte Algorithmen verwendet werden.

Während einer Echtzeit-Anwendung einer Wärmebildkamera kann es vorkommen, dass unzureichende Bedingungen wie beispielsweise ein zu geringer Kontrast für eine Methode zur Erhöhung einer Auflösung eines Bildes einer Wärmebildkamera, insbesondere einen Super-Resolution-Algorithmus, eine Verschlechterung der verarbeiteten Bilder im Vergleich zu den Ursprungsbildern bedeuten.

In JP 2012 209656 A wird eine Infrarotdetektionsvorrichtung zur Verbesserung der Auflösung eines von einem Infrarotsensor erhaltenen Bildes beschrieben.

### Offenbarung der Erfindung

Der Gegenstand der Erfindung ist durch die beigefügten Ansprüche definiert. Gegenstand der Erfindung ist ein computerimplementiertes Verfahren mit den Merkmalen des Anspruchs 1, ein Computerprogramm mit den Merkmalen des Anspruchs 9, eine Vorrichtung mit den Merkmalen des Anspruchs 10 sowie ein computerlesbares Speichermedium mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein Verfahren zur Anwendung einer Methode zur Erhöhung einer Auflösung eines Bildes einer Wärmebildkamera, umfassend die nachfolgenden Schritte, wobei die Schritte wiederholt und/oder nacheinander durchgeführt werden können. Die Erhöhung der Auflösung ist insbesondere ein technischer Prozess, bei dem die Anzahl der Pixel in dem Bild der Wärmekamera erhöht wird, um eine durch einen Benutzer wahrgenommene Detailgenauigkeit und Schärfe des Bildes zu verbessern. Dies kann auf verschiedene Arten erreicht werden, beispielsweise durch Interpolation, wobei neue Pixel zwischen den bestehenden Pixeln des Bildes eingefügt werden. Ferner können Super-Resolutionsalgorithmen angewandt werden, welche eine spezialisierte Form der Bildauflösungsverbesserung sind. Dabei werden insbesondere fehlende Details in niedrig aufgelösten Bildern rekonstruiert. Super-Resolutionsalgorithmen können oft detailliertere und klarere Ergebnisse liefern als eine einfache Interpolation. Die Wärmebildkamera ist vorzugsweise eine handgehaltene Wärmebildkamera, d.h. eine Wärmebildkamera, welche von einem Benutzer in der Hand gehalten und bedient werden kann.

In einem ersten Schritt werden vorzugsweise Bilddaten bereitgestellt, wobei die Bilddaten eine definierte Anzahl an Bildern aufweisen, wobei die Bilder reguläre Kamerabilder und/oder Wärmebilder sind, wobei die Bilddaten aus einer Erfassung der Wärmebildkamera resultieren. Die regulären Kamerabilder können im Rahmen der vorliegenden Erfindung auch als visuelle Bilder verstanden und bezeichnet werden und sind insbesondere Bilder, die ein für einen Menschen sichtbares Lichtspektrum repräsentieren. Die regulären Kamerabilder können von einem Kamerasensor der Wärmebildkamera erfasst werden. Die Wärmebilder sind insbesondere Infrarotbilder, d.h. Bilder in einem Spektrum des Infrarotbereichs. Die Wärmebilder können mit einem Infrarot-Kamerasensor der Wärmebildkamera erfasst werden.

In einem weiteren Schritt wird vorzugsweise ein Kontrast in den Bilddaten analysiert. Beispielsweise kann eine Histogrammanalyse durchgeführt werden, um den Kontrast anhand eines bestimmten Prozentsatzes einer Pixelintensitäts- oder Helligkeitsverteilung zu bestimmen. Ein weiterer möglicher Ansatz könnte eine Berechnung der Standardabweichung der Pixelintensitäten oder Helligkeitswerte sein, um den Kontrast zu bestimmen und analysieren zu können. Ferner kann eine lokale Kontrastanalyse durchgeführt werden. Hierbei wird insbesondere der Kontrast in verschiedenen Bereichen des Bildes separat analysiert.

In einem weiteren Schritt wird vorzugsweise die Anwendung der Methode zur Erhöhung der Auflösung in Abhängigkeit von einem Ergebnis der Analyse des Kontrastes in den Bilddaten initiiert. Damit sei insbesondere ausgedrückt, dass die Anwendung der Methode zur Erhöhung der Auflösung beispielsweise lediglich angewandt wird, wenn ein ausreichender Kontrast in den Bilddaten bestimmt wird. Als Methode zur Erhöhung der Auflösung können verschiedene im Stand der Technik bekannte Verfahren wie beispielsweise eine Interpolation oder eine Super-Resolution durchgeführt werden. Es kann sein, dass die Methode zur Erhöhung der Auflösung bei einem niedrigen Kontrast in den Bilddaten schlechtere Ergebnisse bereitstellt. Durch das vorliegende Verfahren kann somit vorteilhaft evaluiert werden, ob die Bilddaten basierend auf dem Bewertungsparameter des Kontrastes für die Methode zur Erhöhung der Auflösung geeignet sind.

Weiter ist im Rahmen der Erfindung denkbar, dass das Analysieren die folgenden Schritte umfasst:
- Definieren eines Schwellwertes für den Kontrast in den Bilddaten,
- Vergleichen der jeweiligen Kontraste einzelner Bilder der Bilddaten mit dem definierten Schwellwert für den Kontrast.

Das Definieren des Schwellwerts für den kann auf verschiedene Weisen erfolgen, abhängig von einem spezifischen Anwendungsfall und gewünschten Kriterien. Beispielsweise kann eine Histogrammanalyse durchgeführt werden. Dabei kann der Schwellwert anhand eines bestimmten Prozentsatzes einer Pixelintensitäts- oder Helligkeitsverteilung definiert werden. Ein weiterer möglicher Ansatz könnte eine Berechnung der Standardabweichung der Pixelintensitäten oder Helligkeitswerte sein. Der Schwellwert könnte dann beispielsweise als ein Vielfaches der Standardabweichung festgelegt werden, um Bereiche mit hohem Kontrast zu identifizieren. Ferner kann eine lokale Kontrastanalyse durchgeführt werden. Hierbei wird insbesondere der Kontrast in verschiedenen Bereichen des Bildes separat analysiert und ein lokaler Schwellwert bestimmt. Dies kann in Bildern mit variierenden Beleuchtungsbedingungen vorteilhaft sein. Der Kontrast der einzelnen Bilder wird vorzugsweise in analoger Weise wie bei dem Definieren des Schwellwerts für den Kontrast ermittelt, um den Vergleich durchzuführen.

Wenn das Ergebnis des Vergleichens ergibt, dass der Kontrast einer festgelegten Anzahl an Bildern über dem definierten Schwellwert liegt, kann vorgesehen sein, dass im Rahmen des Initiierens lediglich Bilder der definierten Anzahl an Bildern bereitgestellt werden, deren Kontrast über dem definierten Schwellwert liegt. In anderen Worten kann hierbei die Methode zur Erhöhung der Auflösung lediglich mit Bildern mit einem für die Methode zur Erhöhung der Auflösung geeigneten Kontrast durchgeführt werden, wodurch vorteilhaft ein Ergebnis der Methode verbessert werden kann.

Es ist ferner denkbar, dass, wenn das Ergebnis des Vergleichens ergibt, dass der Kontrast einer festgelegten Anzahl an Bildern unter dem definierten Schwellwert liegt, das Initiieren blockiert wird. Es kann sein, dass die Methode zur Erhöhung der Auflösung erst ab einem bestimmten Kontrastwert ein zufriedenstellendes Ergebnis bereitstellt und ansonsten sogar eine Verschlechterung herbeiführen könnte. Daher kann mit dem Verfahren gemäß der vorliegenden Erfindung vorteilhaft die Anwendung der Methode zur Erhöhung der Auflösung verhindert werden, wenn der Kontrast unter dem definierten Schwellwert liegt. Wenn das Initiieren der Anwendung der Methode zur Erhöhung der Auflösung blockiert wird, kann vorgesehen sein, dass eine entsprechende Ausgabe an einen Benutzer der Wärmebildkamera erfolgt, beispielsweise über ein Display oder einen Lautsprecher der Wärmebildkamera. Die Ausgabe könnte den Benutzer darauf hinweisen, dass die Methode zur Erhöhung der Auflösung, welche beispielsweise durch einen bestimmten Modus in der Wärmebildkamera implementiert sein kann, aktuell nicht möglich ist.

Bevorzugt kann im Rahmen der Erfindung vorgesehen sein, dass die Methode zur Erhöhung der Auflösung die folgenden Schritte umfasst, wobei die Schritte vorzugsweise nacheinander durchgeführt werden. In einem ersten Schritt wird vorzugsweise eine Subpixelverschiebung der definierten Anzahl an Bildern gegenüber einem Referenzbild bestimmt, wobei das Referenzbild eines der definierten Anzahl an Bildern ist. In diesem Schritt wird insbesondere für jedes Bild der definierten Anzahl an Bildern eine Verschiebung auf Subpixel-Ebene relativ zu dem ausgewählten Referenzbild bestimmt, beispielsweise über eine Bestimmung eines optischen Flusses. Das ausgewählte Referenzbild kann beispielsweise das zeitlich letzte Bild der definierten Anzahl an Bildern sein. Diese Verschiebung ist insbesondere notwendig, um Unterschiede in der Kameraposition oder Perspektive zwischen den Bildern auszugleichen. Die Genauigkeit auf Subpixel-Ebene ermöglicht vorteilhaft eine präzisere Ausrichtung, was die Qualität des resultierenden Bildes erhöhen kann.

In einem weiteren Schritt wird vorzugsweise die definierte Anzahl an Bildern auf Basis der bestimmten Subpixelverschiebung verschoben, sodass diese auf das Referenzbild ausgerichtet sind. Nachdem die Subpixelverschiebung für jedes Bild der definierten Anzahl an Bildern bestimmt wurde, können die Bilder demnach entsprechend verschoben werden, um sie mit dem Referenzbild auszurichten. Durch diese Ausrichtung kann vorteilhaft sichergestellt werden, dass korrespondierende Punkte in allen Bildern übereinstimmen, was insbesondere für eine anschließende Fusion der Bilder erforderlich ist.

In einem weiteren Schritt werden vorzugsweise die definierte Anzahl an Bildern um einen definierten Skalierungsfaktor skaliert. Beispielsweise kann eine vierfache Skalierung, d.h. ein definierter Skalierungsfaktor von vier, vorgesehen sein. Dies kann aus verschiedenen Gründen erfolgen, wie der Anpassung der Bilder an eine bestimmte Zielauflösung oder der Vereinheitlichung der Bildgrößen zur Verbesserung der Ausrichtung und/oder zur Reduzierung der Rechenlast bei der anschließenden Bildfusion. Im Rahmen des Skalierens können die Bilder der definierten Anzahl an Bildern jeweils interpoliert werden.

In einem weiteren Schritt wird vorzugsweise ein resultierendes Bild auf Basis der skalierten definierten Anzahl an Bildern und der bestimmten Subpixelverschiebung bestimmt. Dieser Schritt kann auch als eine Fusion der Bilder zu dem resultierenden Bild verstanden werden. Im letzten Schritt wird somit insbesondere das finale hochaufgelöste Bild erzeugt, indem die zuvor skalierten und ausgerichteten Bilder miteinander kombiniert werden. Hierbei werden vorzugsweise Informationen aus allen Bildern der definierten Anzahl an Bildern unter Berücksichtigung ihrer jeweiligen Subpixelverschiebungen integriert. Diese Integration kann vorteilhaft zur Erstellung eines detaillierteren und schärferen Bildes führen, das die Auflösung und Qualität gegenüber den einzelnen Ausgangsbildern deutlich verbessern kann.

Die Methode zur Erhöhung der Auflösung ist vorzugsweise ein Super-Resolutionsalgorithmus, insbesondere ein Multi-Image Super-Resolutionsalgorithmus.

Außerdem kann es im Rahmen der Erfindung von Vorteil sein, dass die definierte Anzahl an Bildern sowohl reguläre Kamerabilder als auch Wärmebilder sind. Die regulären Kamerabilder und die Wärmebilder resultieren vorzugsweise aus einer parallelen Erfassung der Wärmebildkamera. Somit kann die Wärmebildkamera einen Kamerasensor für die Erfassung der regulären Kamerabilder und einen Wärmebildkamerasensor, bzw. Infrarot-Kamerasensor für die Erfassung der Wärmebilder umfassen. Die parallele Erfassung kann ausdrücken, dass gleichzeitig ein jeweiliges Paar aus einem regulären Kamerabild und einem Wärmebild erfasst wird, wobei eine zeitliche Toleranz zwischen den beiden Erfassungen akzeptiert werden kann. Dadurch kann vorteilhaft eine Verknüpfung zwischen dem parallel erfassten regulären Kamerabild und dem Wärmebild hergestellt werden.

Vorteilhaft ist es darüber hinaus, wenn im Rahmen der Erfindung der Schritt des Bestimmens der Subpixelverschiebung auf Basis der regulären Kamerabilder durchgeführt wird, um das Verschieben, das Skalieren und das Bestimmen des resultierenden Bildes auf Basis der Wärmebilder und der auf Basis der regulären Bilder bestimmten Subpixelverschiebung durchzuführen. In den regulären Kamerabildern kann eine höhere Auflösung und/oder ein höherer erkennbarer Detailgrad in den Bildern gegeben sein, wodurch vorteilhaft ein genaueres Bestimmen der Subpixelverschiebung möglich sein kann.

Ferner ist es optional vorgesehen, dass der Schritt des Bestimmens der Subpixelverschiebung, des Verschiebens, des Skalierens und des Bestimmens des resultierenden Bildes auf Basis der Wärmebilder durchgeführt werden. So kann vorteilhaft unabhängig von den regulären Kamerabildern die Methode zur Erhöhung der Auflösung durchgeführt werden. Auch kann vorgesehen sein, dass die Subpixelverschiebung sowohl auf Basis der regulären Kamerabilder, als auch auf Basis der Wärmebilder bestimmt wird, um die jeweiligen bestimmten Subpixelverschiebungen vorteilhaft vergleichen zu können, beispielsweise um Fehler zu erkennen.

Des Weiteren ist es im Rahmen der Erfindung optional möglich, dass die definierte Anzahl an Bildern Wärmebilder sind. Der Schritt des Bestimmens der Subpixelverschiebung, des Verschiebens, des Skalierens und des Bestimmens des resultierenden Bildes können dann auf Basis der Wärmebilder durchgeführt werden. So kann vorteilhaft unabhängig von den regulären Kamerabildern, d.h. beispielsweise auch nur mit einem Wärmebild-, bzw. Infrarot-Kamerasensor, die Methode zur Erhöhung der Auflösung durchgeführt werden.

Vorteilhaft ist es darüber hinaus, wenn im Rahmen der Erfindung die definierte Anzahl an Bildern sowohl reguläre Kamerabilder als auch Wärmebilder sind, wobei die regulären Kamerabilder und die Wärmebilder aus einer parallelen Erfassung der Wärmebildkamera resultieren. Diesbezüglich sei auf die voranstehenden Ausführungen zu dem analogen Abschnitt verwiesen. Die Schritte des Analysierens und des Initiierens können dabei zunächst auf Basis der regulären Kamerabilder durchgeführt werden. So kann zunächst getestet werden, ob die Anwendung der Methode zur Erhöhung der Auflösung mit den regulären Kamerabildern möglich, beziehungsweise sinnvoll ist. Im Rahmen der Methode zur Erhöhung der Auflösung könnte dann die Subpixelverschiebung auf Basis der regulären Kamerabilder durchgeführt werden. Die Schritte des Analysierens und des Initiierens können anschließend in Abhängigkeit von dem Ergebnis der Analyse des Kontrastes erneut auf Basis der Wärmebilder durchgeführt werden, wenn das Ergebnis indiziert, dass der Kontrast für die regulären Kamerabilder einen definierten Schwellwert unterschreitet. Dadurch kann die Methode zur Erhöhung der Auflösung gegebenenfalls auch ausschließlich auf Basis der Wärmebilder durchgeführt werden, wenn die regulären Kamerabilder einen zu geringen Kontrast aufweisen.

Es kann im Rahmen der Erfindung vorgesehen sein, dass das Verfahren ferner den folgenden Schritt umfasst:
- Initiieren einer Anzeige des resultierenden Wärmebildes.

Die Wärmebildkamera kann dafür ein Display aufweisen, auf welchem das resultierende Wärmebild angezeigt wird. Auch ist eine Übertragung des resultierenden Wärmebildes an eine weitere Datenverarbeitungsvorrichtung denkbar, auf welchem das resultierende Wärmebild angezeigt werden soll.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, einer Wärmebildkamera, einer Vorrichtung, eines Speichermediums sowie eines Computerprogramms gemäß Ausführungsbeispielen der Erfindung,
- Fig. 2: eine schematische Darstellung eines Verfahrens gemäß Ausführungsbeispielen der Erfindung.

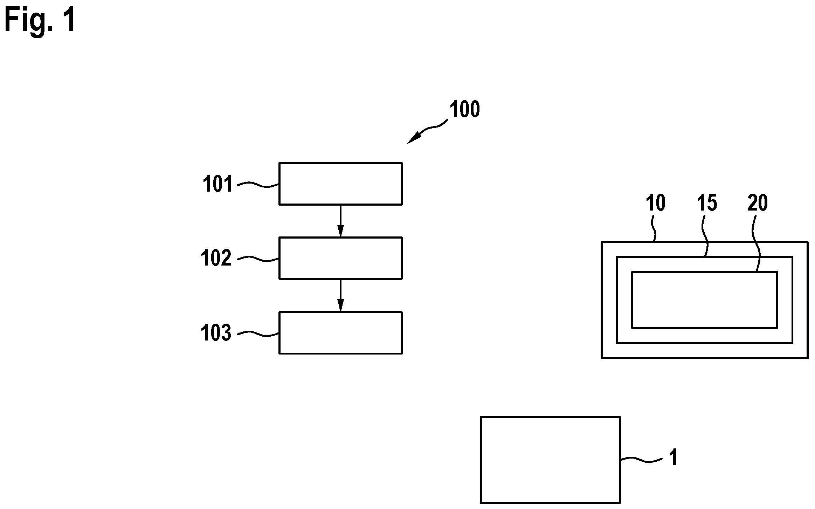

In Fig. 1 sind ein Verfahren 100, eine Wärmebildkamera 1, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zur Anwendung einer Methode zur Erhöhung einer Auflösung eines Bildes einer Wärmebildkamera 1. In einem ersten Schritt 101 werden Bilddaten bereitgestellt, wobei die Bilddaten eine definierte Anzahl an Bildern aufweisen, wobei die Bilder reguläre Kamerabilder und/oder Wärmebilder sind, wobei die Bilddaten aus einer Erfassung der Wärmebildkamera 1 resultieren. In einem zweiten Schritt 102 wird ein Kontrast in den Bilddaten analysiert. In einem dritten Schritt 103 wird die Anwendung der Methode zur Erhöhung der Auflösung in Abhängigkeit von einem Ergebnis der Analyse des Kontrastes in den Bilddaten initiiert.

Super-Resolution ist eine mögliche Methode zur Erhöhung der Auflösung von Bildern, die in Wärmebildkameras 1 angewendet werden kann. Eine Idee ist dabei, dass vorzugsweise kurz hintereinander mehrere Bilder aufgenommen und zu einem Bild mit höherer Auflösung kombiniert werden. Dies geschieht beispielsweise in zwei Schritten, wobei eine beliebige Zahl N an Bildern betrachtet werden kann. In einem ersten Schritt werden die N Bilder beispielsweise mithilfe ihres optischen Flusses relativ zu einem Referenzbild registriert, um festzustellen, wie sie zueinander verschoben sind. In einem zweiten Schritt werden die registrierten Bilder insbesondere zu einem neuen Bild mit höherer Auflösung fusioniert. Für die Bestimmung der Subpixelverschiebungen, d.h. des optischen Flusses, kann das visuelle Bild verwendet werden, da dieses eine höhere Auflösung besitzt und damit genauere Verschiebungen bestimmt werden können. Ein visuelles Bild ist im Rahmen der vorliegenden Erfindung insbesondere ein Bild, welches aus einer Erfassung einer regulären Kamera resultiert und ein für einen Menschen sichtbares Lichtspektrum repräsentiert. Die Fusion muss jedoch insbesondere auf den Wärmebildern durchgeführt werden, da diese verbessert werden sollen.

Der erste Schritt erfolgt somit insbesondere über die Bestimmung des optischen Flusses und der zweite über iterative Verfahren, beispielsweise mithilfe von klassischen Bildverarbeitungsmethoden. Alternativ sind aber auch maschinenlernbasierte Verfahren anwendbar, die diese Schritte mithilfe von Maschinenlernmodellen, insbesondere neuronalen Netzen lösen.

Im Rahmen der Erfindung wird gemäß Ausführungsbeispielen basierend auf dem Kontrast der Wärmebilder und/oder der visuellen Bilder ermittelt, ob die Methode zur Erhöhung der Auflösung der Wärmebildkamera 1, d.h. insbesondere der Super-Resolution-Algorithmus, angewandt werden soll, ob diese in angepasster Art und Weise angewandt werden soll oder ob diese bei unzureichenden Bedingungen deaktiviert, bzw. blockiert, werden soll.

Ein Aspekt der vorliegenden Erfindung gemäß Ausführungsbeispielen ist somit insbesondere eine Anwendung der Methode zur Erhöhung der Auflösung der Wärmebildkamera 1, insbesondere des Super-Resolution-Algorithmus in Wärmebildkameras 1, in Abhängigkeit vom Kontrast der Bilder.

Zunächst wird vorzugsweise eine Sequenz von Bildern betrachtet, beispielsweise drei Bilder. Anschließend kann eine Verschiebung der Bilder zueinander bestimmt werden, um die Bilder aufeinander zu mappen. Anschließend werden die registrierten Bilder vorzugsweise gemäß einer Methode zur Erhöhung der Auflösung der Wärmebildkamera 1 zu einem einzelnen, besser aufgelösten Bild fusioniert. Ein Beispiel solch eines Algorithmus wäre der MMCNN-Algorithmus (Multi-Memory Convolutional Neural Network for Video Super-Resolution), es können jedoch auch andere Maschinenlernmodelle wie neuronale Netzwerke mit denselben Blöcken, d.h. eine Bildregistrierung gefolgt von einer Bild-Fusion verwendet werden. Alternativ kann der Algorithmus auch aus zwei einzelnen Maschinenlernmodellen, eins für die Bildregistrierung und eins für die Bild-Fusion, erstellt werden. Für eine genauere Bildregistrierung können die höher aufgelösten visuellen Bilder verwendet werden. Die darauf bestimmte Bewegung kann dann auf die Wärmebilder übertragen werden, welche für die Fusion benötigt werden, da deren Auflösung verbessert werden soll. Die Maschinenlernmodelle, die verwendet werden, sind vorzugsweise bereits trainiert, sodass sie ohne große Veränderungen verwendet werden können und höchstens noch für eine bessere Leistung nachtrainiert werden können.

Bei der Methode zur Erhöhung der Auflösung der Wärmebildkamera 1, unabhängig davon welche konkret verwendet wird, müssen allerdings vorzugsweise bestimmte Voraussetzungen gegeben sein, um ein qualitativ hochwertiges Ergebnis zu erzielen und das Wärmebild nicht zu verschlechtern.

Daher bezieht sich die Erfindung gemäß Ausführungsbeispielen vor allem auf eine bedingte Anwendung der Methode zur Erhöhung der Auflösung der Wärmebildkamera 1, insbesondere der Super-Resolution. Ein zu niedriger Kontrast in den Bildern kann dazu führen, dass die Bilder nicht akkurat registriert werden können, sodass die Subpixelverschiebung der einzelnen Bilder zueinander falsch berechnet wird und das durch die Methode resultierende Bild eine schlechtere Qualität hat als das ursprüngliche Bild. Dies kann insbesondere der Fall sein, wenn lediglich das visuelle Bild für die Registrierung verwendet wird und im visuellen Bild kein Kontrast vorhanden ist, im Wärmebild aber schon. Dies kann beispielsweise bei Aufnahmen bei Nacht oder im Dunkeln auftreten.

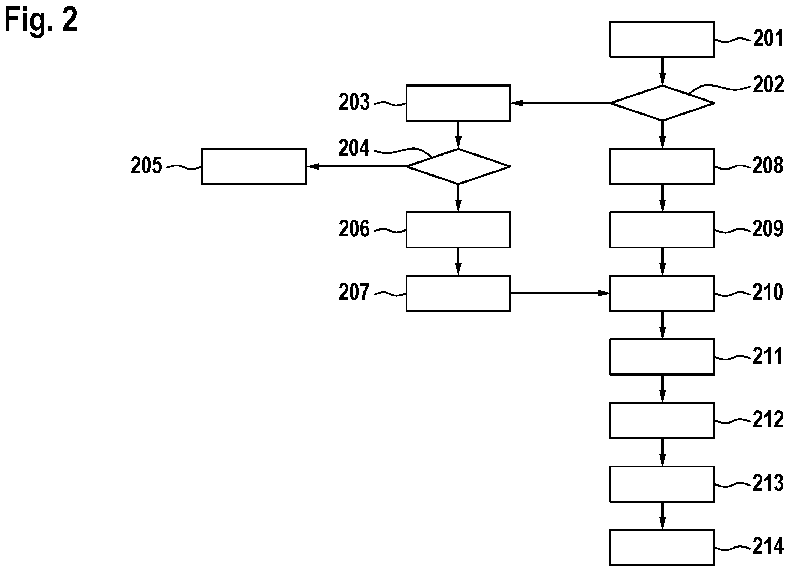

Daher sollte die Bildregistrierung vorzugsweise auf Wärmebildern basieren, falls diese einen ausreichenden Kontrast aufweisen, die visuellen Bilder, d.h. reguläre Kamerabilder, welche aus einer Erfassung eines regulären Kamerasensors resultieren, jedoch nicht. Falls beide keinen ausreichenden Kontrast aufweisen, sollte die Methode zur Erhöhung der Auflösung der Wärmebildkamera 1 vorzugsweise überhaupt nicht angewandt werden. Ein möglicher Ablauf gemäß einem Ausführungsbeispiel ist in Fig. 2 gezeigt. Solange die Wärmebildkamera 1 eingeschaltet ist, wird vorzugsweise der in Fig. 2 gezeigte Ablauf für neue Bilder ausgeführt, insbesondere permanent. Hierbei gehen kann eine Methode zur Erhöhung der Auflösung der Wärmebildkamera 1 angewendet werden, welche die Bildregistrierung auf den visuellen Bildern bestimmt. Falls die Methode Wärmebilder verwendet, kann der erste Teil übersprungen und bei Schritt 203 begonnen, gemäß welchem der Kontrast in N aufeinanderfolgenden Wärmebildern bestimmt wird. Dieser Teil kann auch im Fall der Registrierung auf visuellen Bildern behandelt werden. Es wird vorzugsweise gemäß Schritt 201 der Kontrast in N aufeinanderfolgenden visuellen Bildern bestimmt und gemäß Schritt 202 dauerhaft getestet, ob bei diesen N (z.B. 5) aufeinanderfolgenden visuellen Bildern mehr als eine festgelegte Anzahl (z.B. die Hälfte) einen Kontrast über einem definierten Schwellwert hat. Ist dies der Fall, können alle visuellen Bilder, die diese Bedingung erfüllen, für die Bildregistrierung verwendet werden, die restlichen werden gemäß Schritt 208 vorzugsweise verworfen. Für die verwendeten visuellen Bilder wird gemäß Schritt 209 insbesondere der optische Fluss bestimmt, um eine Subpixelverschiebung zu einem Referenzbild (z.B. dem neuesten verwendeten Bild) zu erhalten. Diese Subpixelverschiebung wird dann vorzugsweise gemäß Schritt 210 auf die Wärmebilder übertragen und diese werden gemäß Schritt 211 insbesondere um ganze Pixel so verschoben, dass der Bildinhalt möglichst übereinanderliegt. Anschließend werden die Wärmebilder gemäß Schritt 212 auf ein Vielfaches der ursprünglichen Größe (z.B. vierfach) skaliert, bzw. interpoliert, und gemäß Schritt 213 unter Berücksichtigung der festgestellten Subpixelverschiebung fusioniert, um ein resultierendes hochskaliertes Wärmebild zu erhalten. Dieses kann dann gemäß Schritt 214 auf einem Display der Wärmebildkamera 1 angezeigt werden. Falls nicht mindestens die Hälfte der betrachteten visuellen Bilder einen Kontrast über dem definierten Schwellwert aufweisen, werden die visuellen Bilder vorzugsweise nicht für die Registrierung der Methode zur Erhöhung der Auflösung der Wärmebildkamera 1 verwendet werden. In dem Fall wird vorzugsweise gemäß Schritt 203 getestet, ob die Wärmebilder einen ausreichenden Kontrast aufweisen. Ist beispielsweise nur ein Kontrast kleiner als der definierte Schwellwert in höchstens der Hälfte der Wärmebilder, kann insbesondere auch hierauf keine ausreichend genaue Registrierung angewendet werden, sodass keine Methode zur Erhöhung der Auflösung der Wärmebildkamera 1, insbesondere kein Super-Resolution, angewendet wird. Demnach wird anschließend vorzugsweise gemäß Schritt 205 das ursprüngliche Bild auf dem Display der Wärmebildkamera 1 angezeigt. Falls mehr als die Hälfte der Wärmebilder einen Kontrast über dem definierten Schwellwert aufweist, sind die Voraussetzungen für die Anwendung der Methode zur Erhöhung der Auflösung der Wärmebildkamera 1, d.h. insbesondere der Super-Resolution, erfüllt. In dem Fall werden die Wärmebilder mit zu geringem Kontrast gemäß Schritt 206 vorzugsweise verworfen und von den restlichen Bildern kann gemäß Schritt 207 die Subpixelverschiebung relativ zum Referenzbild mithilfe des optischen Flusses bestimmt werden.

Anschließend werden die Wärmebilder vorzugsweise zunächst gemäß Schritt 211 um ganze Pixel entsprechend dem zuvor bestimmten optischen Fluss verschoben und gemäß Schritt 212 auf ein vielfaches der ursprünglichen Auflösung hochskaliert. Schließlich werden diese hochskalierten Wärmebilder gemäß Schritt 213 insbesondere zu einem einzigen, hoch aufgelösten Bild fusioniert und gemäß Schritt 214 auf dem Display der Wärmebildkamera 1 angezeigt.

Da ein möglicher Anwendungsfall gemäß eines Ausführungsbeispiels eine Echtzeitanwendung der Wärmebildkamera 1 ist, wird dieser Prozess vorzugsweise über die gesamte Verwendungszeit der Wärmebildkamera 1 in einer Schleife ausgeführt.

Dabei kann die Methode zur Erhöhung der Auflösung, d.h. insbesondere der Super-Resolution-Algorithmus, sowohl in der Echtzeitanwendung auf der Wärmebildkamera 1 als auch beim Abspeichern der Bilder oder in einer Computer-/Smartphone-App zur Nachbearbeitung verwendet werden. Im Fall der Nachbearbeitung wird im Gerät vorzugsweise bewertet, ob der Kontrast in visuellen und Wärmebildern eine Methode zur Erhöhung der Auflösung, insbesondere eine Super-Resolution, erlaubt und ein entsprechender Qualitätsindikator kann erstellt werden. Nach der Übertragung der Bilder zusammen mit dem Qualitätsindikator kann anschließend auf dem Computer bzw. Smartphone bewertet werden, ob die Voraussetzungen für die Anwendung der Methode zur Erhöhung der Auflösung, insbesondere der Super-Resolution, gegeben sind und falls dies zutrifft, kann die Methode zur Erhöhung der Auflösung, insbesondere der Super-Resolution Algorithmus ausgeführt werden. Im Falle einer Echtzeitanwendung können alle diese Schritte auf dem Gerät, d.h. insbesondere auf der Wärmebildkamera 1, ausgeführt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Computerimplementiertes Verfahren (100) zur Anwendung einer Methode zur Erhöhung
einer Auflösung eines Bildes einer Wärmebildkamera (1), umfassend die nachfolgenden Schritte:
- Bereitstellen (101) von Bilddaten, wobei die Bilddaten eine definierte Anzahl an Bildern aufweisen, wobei die Bilder reguläre Kamerabilder und/oder Wärmebilder sind, wobei die Bilddaten aus einer Erfassung der Wärmebildkamera (1) resultieren,
- Analysieren (102) eines Kontrastes in den Bilddaten,
- Initiieren (103) der Anwendung der Methode zur Erhöhung der Auflösung in Abhängigkeit von einem Ergebnis der Analyse des Kontrastes in den Bilddaten,
wobei das Analysieren (102) die folgenden Schritte umfasst:
- Definieren eines Schwellwertes für den Kontrast in den Bilddaten,
- Vergleichen der jeweiligen Kontraste einzelner Bilder der Bilddaten mit dem definierten Schwellwert für den Kontrast,
wobei, wenn das Ergebnis des Vergleichens ergibt, dass der Kontrast einer festgelegten Anzahl an Bildern unter dem definierten Schwellwert liegt, das Initiieren (103) blockiert wird.

2. Verfahren (100) nach Anspruch 1,
**dadurch gekennzeichnet,**
**dass**, wenn das Ergebnis des Vergleichens ergibt, dass der Kontrast einer festgelegten Anzahl an Bildern über dem definierten Schwellwert liegt, im Rahmen des Initiierens (103) lediglich Bilder der definierten Anzahl an Bildern bereitgestellt werden, deren Kontrast über dem definierten Schwellwert liegt.

3. Verfahren (100) nach einem der vorhergehenden Ansprüche,
**dadurch gekennzeichnet,**
**dass** die Methode zur Erhöhung der Auflösung des Bildes der Wärmebildkamera (1) die folgenden Schritte umfasst:
- Bestimmen einer Subpixelverschiebung der definierten Anzahl an Bildern gegenüber einem Referenzbild, wobei das Referenzbild eines der definierten Anzahl an Bildern ist,
- Verschieben der definierten Anzahl an Bildern auf Basis der bestimmten Subpixelverschiebung, sodass diese auf das Referenzbild ausgerichtet sind,
- Skalieren der definierten Anzahl an Bildern um einen definierten Skalierungsfaktor,
- Bestimmen eines resultierenden Bildes auf Basis der skalierten definierten Anzahl an Bildern und der bestimmten Subpixelverschiebung.

4. Verfahren (100) nach Anspruch 3,
**dadurch gekennzeichnet,**
**dass** die definierte Anzahl an Bildern sowohl reguläre Kamerabilder als auch Wärmebilder sind, wobei die regulären Kamerabilder und/oder die Wärmebilder aus einer parallelen Erfassung der Wärmebildkamera (1) resultieren.

5. Verfahren (100) nach Anspruch 4,
**dadurch gekennzeichnet,**
**dass** der Schritt des Bestimmens der Subpixelverschiebung auf Basis der regulären Kamerabilder durchgeführt wird, um das Verschieben, das Skalieren und das Bestimmen des resultierenden Bildes auf Basis der Wärmebilder und der auf Basis der regulären Bilder bestimmten Subpixelverschiebung durchzuführen.

6. Verfahren (100) nach Anspruch 4,
**dadurch gekennzeichnet,**
**dass** der Schritt des Bestimmens der Subpixelverschiebung, des Verschiebens, des Skalierens und des Bestimmens des resultierenden Bildes auf Basis der Wärmebilder durchgeführt werden.

7. Verfahren (100) nach Anspruch 3,
**dadurch gekennzeichnet,**
**dass** die definierte Anzahl an Bildern Wärmebilder sind, wobei der Schritt des Bestimmens der Subpixelverschiebung, des Verschiebens, des Skalierens und des Bestimmens des resultierenden Bildes auf Basis der Wärmebilder durchgeführt werden.

8. Verfahren (100) nach einem der vorhergehenden Ansprüche,
**dadurch gekennzeichnet,**
**dass** die definierte Anzahl an Bildern sowohl reguläre Kamerabilder als auch Wärmebilder sind, wobei die regulären Kamerabilder und die Wärmebilder aus einer parallelen Erfassung der Wärmebildkamera (1) resultieren,
wobei die Schritte des Analysierens (102) und des Initiierens (103) zunächst auf Basis der regulären Kamerabilder durchgeführt werden,
wobei die Schritte des Analysierens (102) und des Initiierens (103) in Abhängigkeit von dem Ergebnis der Analyse des Kontrastes erneut auf Basis der Wärmebilder durchgeführt werden, wenn das Ergebnis indiziert, dass der Kontrast für die regulären Kamerabilder einen definierten Schwellwert unterschreitet.

9. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

10. Vorrichtung (10) zur Datenverarbeitung, die eingerichtet ist, das Verfahren (100) nach einem der Ansprüche 1 bis 8 auszuführen.

11. Computerlesbares Speichermedium (15), umfassend Befehle, die bei der Ausführung durch einen Computer (10) diesen veranlassen, die Schritte des Verfahrens (100) nach einem der Ansprüche 1 bis 8 auszuführen.

## Claims

1. Computer-implemented method (100) for applying a method for increasing a resolution of an image of a thermal imaging camera (1), comprising the following steps:
- providing (101) image data, wherein the image data have a defined number of images, wherein the images are regular camera images and/or thermal images, wherein the image data result from capture by the thermal imaging camera (1),
- analysing (102) a contrast in the image data,
- initiating (103) the application of the method for increasing the resolution depending on a result of the analysis of the contrast in the image data,
wherein the analysing (102) comprises the following steps:
- defining a threshold value for the contrast in the image data,
- comparing the respective contrasts of individual images of the image data with the defined threshold value for the contrast,
wherein if the result of the comparing reveals that the contrast of a stipulated number of images is below the defined threshold value, the initiating (103) is blocked.

2. Method (100) according to Claim 1,
**characterized**
**in that** if the result of the comparing reveals that the contrast of a stipulated number of images is above the defined threshold value, only images of the defined number of images whose contrast is above the defined threshold value are provided in the context of the initiating (103).

3. Method (100) according to either of the preceding claims,
**characterized**
**in that** the method for increasing the resolution of the image of the thermal imaging camera (1) comprises the following steps:
- determining a subpixel displacement of the defined number of images relative to a reference image, wherein the reference image is one of the defined number of images,
- displacing the defined number of images on the basis of the determined subpixel displacement so that they are aligned with the reference image,
- scaling the defined number of images by a defined scaling factor,
- determining a resulting image on the basis of the scaled defined number of images and the determined subpixel displacement.

4. Method (100) according to Claim 3,
**characterized**
**in that** the defined number of images are both regular camera images and thermal images, wherein the regular camera images and/or the thermal images result from parallel capture by the thermal imaging camera (1).

5. Method (100) according to Claim 4,
**characterized**
**in that** the step of determining the subpixel displacement is carried out on the basis of the regular camera images in order to carry out the steps of displacing, scaling and determining the resulting image on the basis of the thermal images and the subpixel displacement determined on the basis of the regular images.

6. Method (100) according to Claim 4,
**characterized**
**in that** the steps of determining the subpixel displacement, displacing, scaling and determining the resulting image are carried out on the basis of the thermal images.

7. Method (100) according to Claim 3,
**characterized**
**in that** the defined number of images are thermal images,
wherein the steps of determining the subpixel displacement, displacing, scaling and determining the resulting image are carried out on the basis of the thermal images.

8. Method (100) according to any of the preceding claims,
**characterized**
**in that** the defined number of images are both regular camera images and thermal images, wherein the regular camera images and the thermal images result from parallel capture by the thermal imaging camera (1),
wherein the steps of analysing (102) and initiating (103) are firstly carried out on the basis of the regular camera images,
wherein the steps of analysing (102) and initiating (103) are carried out again on the basis of the thermal images, depending on the result of the analysis of the contrast, if the result indicates that the contrast for the regular camera images falls below a defined threshold value.

9. Computer program (20), comprising instructions which, when the computer program (20) is executed by a computer (10), cause the latter to execute the method (100) according to any of the preceding claims.

10. Device (10) for data processing, which is configured to execute the method (100) according to any of Claims 1 to 8.

11. Computer-readable storage medium (15), comprising instructions which, when executed by a computer (10), cause the latter to execute the steps of the method (100) according to any of Claims 1 to 8.

## Revendications

1. Procédé mis en œuvre par ordinateur (100) pour l'application d'une méthode d'augmentation d'une résolution d'une image d'une caméra d'imagerie thermique (1), comprenant les étapes suivantes :
- la mise à disposition (101) de données d'image, les données d'image comportant un nombre défini d'images, les images étant des images de caméra normales et/ou des images thermiques, les données d'image résultant d'une détection par la caméra d'imagerie thermique (1),
- l'analyse (102) d'un contraste dans les données d'image,
- le déclenchement (103) de l'application de la méthode d'augmentation de la résolution en fonction d'un résultat de l'analyse du contraste dans les données d'image,
l'analyse (102) comprenant les étapes suivantes :
- la définition d'une valeur de seuil pour le contraste dans les données d'image,
- la comparaison des contrastes respectifs d'images individuelles des données d'image avec la valeur de seuil définie pour le contraste,
le déclenchement (103) étant inhibé lorsque le résultat de la comparaison indique que le contraste d'un nombre fixé d'images se situe au-dessous de la valeur de seuil définie.

2. Procédé (100) selon la revendication 1,
**caractérisé en ce que**,
si le résultat de la comparaison indique que le contraste d'un nombre fixé d'images se situe au-dessus de la valeur de seuil définie, seules les images du nombre défini d'images dont le contraste se situe au-dessus de la valeur de seuil définie sont mises à disposition lors dudit déclenchement (103).

3. Procédé (100) selon l'une des revendications précédentes,
**caractérisé en ce que**,
la méthode d'augmentation de la résolution de l'image de la caméra d'imagerie thermique (1) comprend les étapes suivantes :
- la détermination d'un décalage de sous-pixels du nombre défini d'images par rapport à une image de référence, l'image de référence étant l'une du nombre défini d'images,
- le décalage du nombre défini d'images sur la base du décalage de sous-pixels déterminé, de manière à ce que celles-ci soient alignées sur l'image de référence,
- la mise à l'échelle du nombre défini d'images selon un facteur d'échelle défini,
- la détermination d'une image résultante sur la base du nombre défini d'images mises à l'échelle et du décalage de sous-pixels déterminé.

4. Procédé (100) selon la revendication 3,
**caractérisé en ce que**,
le nombre défini d'images comprend à la fois des images de caméra normales et des images thermiques, les images de caméra normales et/ou les images thermiques résultant d'une détection en parallèle par la caméra d'imagerie thermique (1).

5. Procédé (100) selon la revendication 4,
**caractérisé en ce que**,
l'étape de détermination du décalage de sous-pixels est effectuée sur la base des images de caméra normales, afin d'effectuer le décalage, la mise à l'échelle et la détermination de l'image résultante sur la base des images thermiques et du décalage de sous-pixels déterminé sur la base des images normales.

6. Procédé (100) selon la revendication 4,
**caractérisé en ce que**,
les étapes de détermination du décalage de sous-pixels, de décalage, de mise à l'échelle et de détermination de l'image résultante sont effectuées sur la base des images thermiques.

7. Procédé (100) selon la revendication 3,
**caractérisé en ce que**,
le nombre défini d'images sont des images thermiques,
les étapes de détermination du décalage de sous-pixels, de décalage, de mise à l'échelle et de détermination de l'image résultante étant effectuées sur la base des images thermiques.

8. Procédé (100) selon l'une des revendications précédentes,
**caractérisé en ce que**,
le nombre défini d'images comprend à la fois des images de caméra normales et des images thermiques, les images de caméra normales et les images thermiques résultant d'une détection en parallèle par la caméra d'imagerie thermique (1),
les étapes d'analyse (102) et de déclenchement (103) étant initialement effectuées sur la base des images de caméra normales,
les étapes d'analyse (102) et de déclenchement (103) étant à nouveau effectuées sur la base des images thermiques en fonction du résultat de l'analyse du contraste si le résultat indique que le contraste pour les images de caméra normales se situe au-dessous d'une valeur de seuil définie.

9. Programme informatique (20), comprenant des instructions qui, lors de l'exécution du programme informatique (20) par un ordinateur (10), amènent celui-ci à mettre en œuvre le procédé (100) selon l'une des revendications précédentes.

10. Dispositif (10) de traitement de données, conçu pour mettre en œuvre le procédé (100) selon l'une des revendications 1 à 8.

11. Support de stockage lisible par ordinateur (15), comprenant des instructions qui, lorsqu'elles sont exécutées par un ordinateur (10), amènent celui-ci à exécuter les étapes du procédé (100) selon l'une des revendications 1 à 8.
